# EUROPEAN PATENT APPLICATION

(11) **EP 4 528 572 A1**
(43) Date of publication of application: **26.03.2025**
(21) Application number: 24196589.6
(22) Date of filing: 27.08.2024
(51) Int. Cl.: G06F 30/23, B22F 10/28, B22F 10/80, B33Y 50/00, G06F 30/27, G06F 113/10, G06F 119/18

(54) **SYSTEM AND METHOD FOR PREDICTION BINDER JET DISTORTION AND VARIABILITY USING MACHINE LEARNING**

(30) Priority: 18.09.2023 GR 20230100745; 25.07.2024 US 202418784327
(71) Applicant: General Electric Company, Evendale, Ohio 45215 (US)
(72) Inventor: ATKINSON, Steven Donald, Niskayuna, 12309-1027 (US); TSILIFIS, Panagiotis, Niskayuna, 12309-1027 (US); BARUA, Ananda, Niskayuna, 12309-1027 (US); BROMBERG, Vadim, Niskayuna, 12309-1027 (US)
(74) Representative: Hafner & Kohl PartmbB

(57) **Abstract**

A method for predicting distortion of a part during sintering in an additive process includes receiving a computerized representation of a complex geometric part, discretizing the computerized representation of the complex geometric part into a plurality of elements, processing the plurality of elements of the computerized representation of the complex geometric part with a machine-learning model configured to predict a distorted geometry of the complex geometric part in response to a sintering process, wherein the machine-learning model is trained to predict distortion of a set of primitive geometric coupons represented by image data fed into the machine-learning model during training, the set of primitive geometric coupons having fewer geometries than the complex geometric part, the complex geometric part comprises a plurality of geometries corresponding to geometries associated with the set of primitive geometric coupons, and generating a computerized representation of the predicted distorted geometry of the complex geometric part.

## Description

### CROSS-REFERENCE TO RELATED APPLICATION

This application claims priority to Greek Patent Application Number 20230100745 filed September 18, 2023, which is hereby incorporated herein by reference in its entirety.

### TECHNICAL FIELD

The present specification relates to systems and methods for quantifying the distortion of components such as binder jet parts during sintering and its variability, using machine-learning methods.

### BACKGROUND

Additive manufacturing, which may also be referred to as 3D printing, is a process in which material is built up layer-by-layer to form an object. Binder jetting is an additive manufacturing technique that uses a binder to join particles of a powder to form a three-dimensional object. In particular, the binder is jetted onto successive layers of the powder in a build volume, where layers of the powder and the binder adhere to one another to form a three-dimensional object. The powder may be, for example, polymers, metals, ceramics, or the like. The binder-printed part may be referred to as a "green body part," which may be subjected to subsequent processing to provide a densified final part. For example, the green body part may be inserted in a sintering furnace that heats the green body part to elevated temperatures (e.g., greater than or equal to about 500° C) to remove the binder and solidify the powder particles to one another. Densification of the green body part may result in distortion of the green part's shape.

For example, as the green body part shrinks from sintering-induced densification, different portions of the green body part may be subjected to varying degrees of forces such as gravity and friction that subject different portions of the green body part to different loads, leading to differing degrees of distortion in the green body part. As such, to produce final parts from the green body parts having shapes that conform to an input model, such distortion must be accounted for in the process of printing the green body part. Randomness in the distortion is driven by variability in upstream physical characteristics of the manufacturing process such as heterogeneity in powder packing fraction. Quantifying distortion variability may be done by sampling from a postulated distribution of the drivers and computing the resultant distortion via a calibrated computer simulation code. However, doing so is computationally costly.

Accordingly, there is a need for systems and methods that quantify distortion of components such as binder jet parts during sintering.

### BRIEF DESCRIPTION OF THE DRAWINGS

The embodiments set forth in the drawings are illustrative and exemplary in nature and are not intended to limit the disclosure. The following detailed description of the illustrative embodiments can be understood when read in conjunction with the following drawings, where like structure is indicated with like reference numerals and in which:
FIG. 1 depicts an illustrative process diagram of an implementation of a trained surrogate model for quantifying the distortion of a complex geometric part during sintering and the variability of the distortion, according to one or more embodiments shown and described herein;
FIG. 2 depicts an illustrative process diagram of an implementation for training the image-to-X surrogate model, according to one or more embodiments shown and described herein;
FIG. 3 depicts illustrative examples of simple geometries and the paired distortion results for training the image-to-X surrogate model, according to one or more embodiments shown and described herein;
FIG. 4 depicts an image-to-continuous surrogate model (I2C model), according to one or more embodiments shown and described herein;
FIG. 5 depicts an image-to-image surrogate model (I2I model), according to one or more embodiments shown and described herein;
FIG. 6 depicts a flow diagram of an illustrative method for quantifying the distortion of components such as binder jet parts during sintering and its variability, using machine-learning methods, according to one or more embodiments shown and described herein; and
FIG. 7 depicts an illustrative system for implementing the methods according to one or more embodiments shown and described herein.

### DETAILED DESCRIPTION

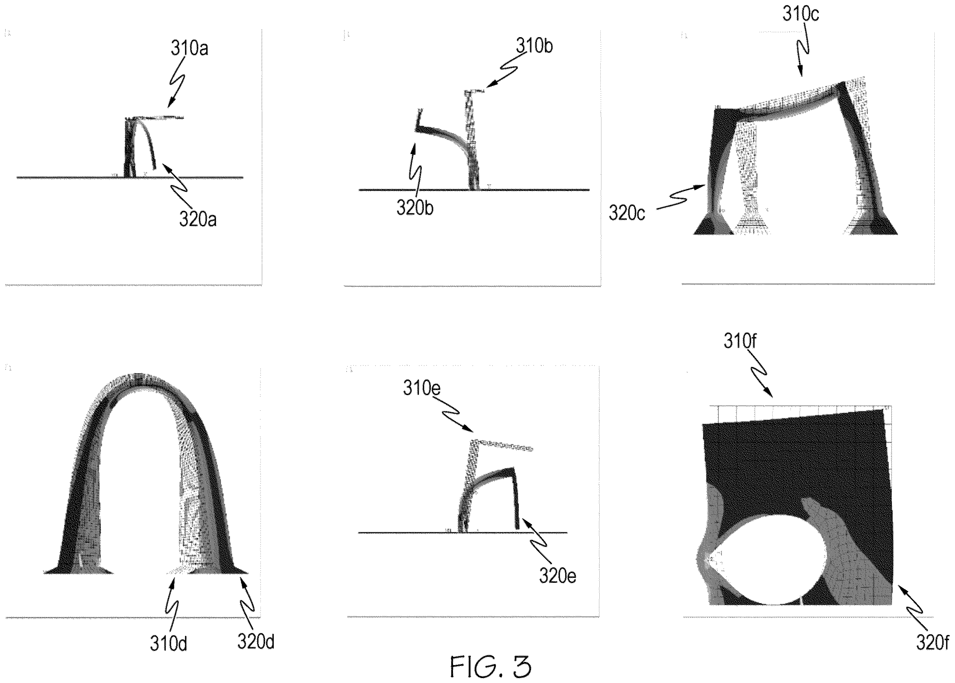

Embodiments of the present disclosure provide systems and methods for quantifying the distortion of components such as binder jet parts during sintering and its variability, using machine-learning methods. The machine-learning methods (e.g., surrogate models) described herein are achieved by constructing a surrogate model based on deep neural networks applicable to a wide diversity of geometries and material properties. The surrogate models are trained using computerized representations (generally referred to herein as "images", but includes 2D and 3D models) of simple geometries (e.g., primitive geometric parts such as blocks, cylindrical posts, arches, overhangs, and the like for example, including but not limited to those geometries depicted in FIG. 3) paired with either corresponding sintering simulation based distortion results or measured results from coupons (e.g., additively manufactured simple geometric components) manufactured using an additive manufacturing process and subsequently sintered. The surrogate models are trained to make predictions on simple geometries so that when complex geometries are input to the model, the trained surrogate models can correlate the learned behaviors of simple components following sintering to discrete features of the complex geometry thereby enabling predictions of distortion of complex geometry components. Furthermore, the model can predict mean distortion and variability of distortion due to variability in input data set - green density, sintering temperature, etc.

As used herein "deformation" refers generally to a change in the shape of a part, which includes at least two sub classes, "distortion" which is stable deformation and "buckling event" which is unstable deformation.

As used herein, a "green part" refers to a component such as a one that is manufactured using an AM process such as a binder jet printer. Binder jet printers refer to a variety of AM machines and process. For example, a binder jet printer may include a system that prints or jets binder onto a powder bed where the binder binds build material (e.g., metal particles or other material) which it contacts on the powder bed into a green part. The green part has a low mechanical strength until it is sintered, whereby sintering melts and/or permanently fuses the build material together to form the final dense component. It should be understood that the terms "part" and "component" may be used interchangeably herein.

The methods described in the present embodiments simplify the complexity and computational costs by employing surrogate models that are trained on simple geometries. The technology described herein has predictive power over a large input space due to the high-dimensional, image-based representation of the article (and optionally corresponding support structures) to be analyzed. This presents an advantage over parametric surrogate models which operate on a low-dimensional input space relevant only to a single family of qualitatively-similar designs and require retraining for each new geometry to be considered. The technology is capable of rapidly predicting the distortion output, making query problems such as distortion variability quantification tractable.

The machine-learning surrogate models are enabled through the implementation of convolutional neural networks (CNNs). In embodiments, the part is represented by a spatial mesh, which may have spatially-heterogeneous properties characterized by some distribution *p*(***x***). This distribution can denote variation in inputs such as variation of green density. The deflection of the sintered part is quantified by a vector field, discretized as a finite-dimensional vector ***y*** = ***f***(***x***)*,* where ***f*** represents the output of a computer simulation code or experimental measurement. Embodiments seek to quantify the statistics of *p*(***y***) induced by the operation of ***f*** on *p*(***x***)*.* In particular, a surrogate model based on a novel deep neural network architecture that enables one to approximately evaluate ***f***(***x***) orders of magnitude more quickly than, for instance Monte Carlo estimation of the same data.

As briefly discussed above, material in binder jet printing joins the grains/particles of material of the powder bed together via the binder to create a binder-printed part. This binder-printed part may be referred to as a "green part". The green part may then be received in a sintering furnace.

When a green part is exposed to a sufficient temperature (e.g., ~1000 °C), binder, which holds the powder of the green part together is evaporated, expelled, decomposed, burned-off, or otherwise removed from the green part. The temperature may be raised to sinter the particles such that the powder particles are solidified together to form a sintered and solid part. Accordingly, under sintering conditions, the green part may become malleable, thereby permitting distortion of less stable portions of the green part before the effects of sintering are fully realized. For example, the sintering process may include densification of the initially porous part leading to volumetric shrinkage. The distortion may also be a result of gravity induced warping of the part.

As a non-exhaustive example, the green part may include 50% to 70% by volume of the particulate material used to form the layers of powder. Another 1 % to 2 % of the volume of the green part may include cured binder solution (e.g., cured from the binder solution introduced into the layers of powder for structure. A remainder of the volume of the green part may be porous. As such, after production by the additive manufacturing apparatus, the green part may generally be approximately 50% dense to 70% dense. It should be understood that such densities may be after performance of post-printing processes (e.g., transferring, inspection, depowdering, and the like) of the green part.

To further densify, the green part is transferred to a sintering furnace (not depicted) that heats the green part to at least a first elevated temperature. In embodiments, sintering of the green part may occur in multiple stages. For example, in embodiments, sintering may include heating the green part to at least a first elevated temperature to induce thermal decomposition of at least a portion of a binder used to print the green part (e.g., to "debind" the green part). The green part may then be heated above a second elevated temperature that is greater than the first elevated temperature to consolidate powder particles to form a post-sintering part. The second elevated temperature may be referred to as a sintering compaction temperature at which to the particulate material used to form the layers of powder begins to melt in order to solidify the green part and compact the green part into a post-sintering part. In embodiments, the second elevated temperature is greater than or equal to 300°C (e.g., greater than or equal to 500°C, greater than or equal to 700°C, greater than or equal to 1000°C). In embodiments, the post-sintering part possesses a higher density than the green part. For example, the post-sintering part is 95% or more by volume of sintered particulate material with about 5% or less being a porous volume.

The systems and methods disclosed herein provide analysis tools to a user (e.g., a designer or engineer) that allow the user to analyze a green part under sintering conditions so that less stable (e.g., weak) features within the green part may be identified and improved during design rather than expending time and resources performing iterative trials to determine the best design to achieve the desired sintered part.

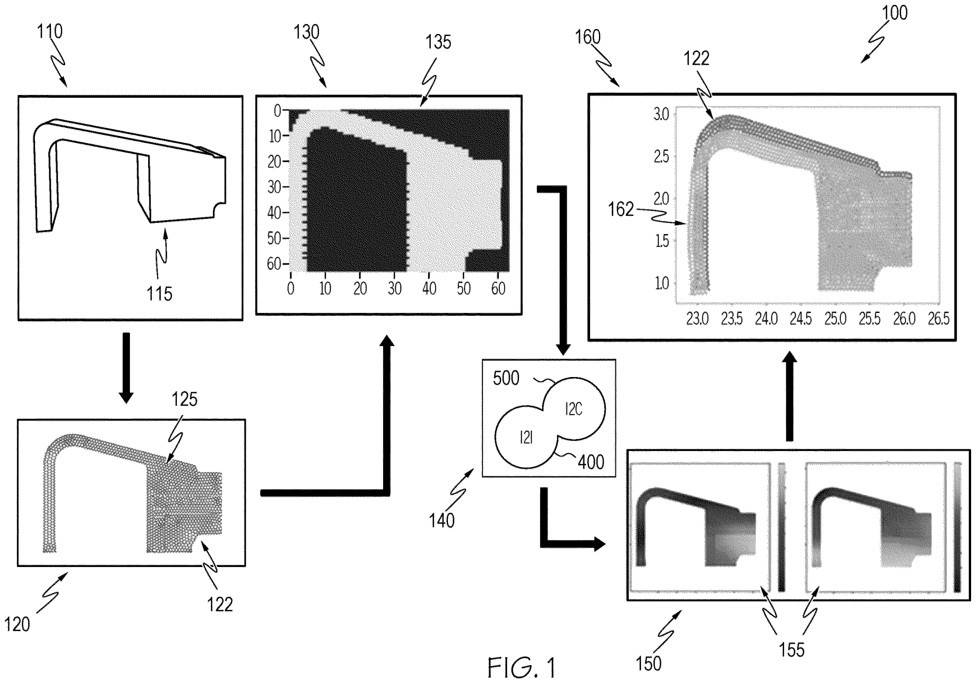

The following will now describe these systems and methods in more detail with reference to the drawings and where like numbers refer to like structures. FIG. 1 depicts an illustrative process diagram 100 of an implementation of a trained surrogate model for quantifying the distortion of a complex geometric part during sintering and the variability of the distortion.

In embodiments, the process for predicting distortion in additive manufactured components can be used to screen designs for distortions before manufacturing and sintering. In order to project these inputs to a form that can be operated on by a CNN, pre-processing the data is needed. Pre-processing the data includes representing each element as an equivalent square (2D) or voxel (3D) with matching centroid and area/volume to the original element. At block 110, 2D or 3D computer models 115 of a complex geometric part can be sliced into one or more 2D cross sections (not shown) to look for severely distorted regions with the surrogate models described herein.

At block 120, the 2D cross sections are discretized into elements 125 (e.g., including but not limited to finite elements or finite difference point representations). That is, the inputs to the computational model are unstructured meshes. For example, at block 120, a finite element method or a finite difference method is used to subdivide a complex geometric part into smaller, simpler parts that are called finite elements or a finite difference point representation, respectively. The resulting set of finite elements form a mesh 122.

At block 130, the mesh is projected to an image 135 for processing by the surrogate model. The projected image is configured to have a resolution predetermined by a user. The selection of the resolution is driven by the intricacy of the complex geometric part. That is, a higher resolution may be needed for complex parts whereas a lower resolution may be needed for simpler parts. More specifically, the higher the resolution the more detailed the geometry that is represented in the image. For example, a desired image resolution (e.g., **nx** × **ny**) is specified. The original dimensions are represented by **Lx, Ly.** Using the desired image resolution, the element centroid coordinates and element volumes are rescaled to **[0,nx]**×**[0,ny]**. Additionally, the scales are defined (e.g., **x_scale** = **nx** / **Lx, y_scale** = **ny** / **Ly).** For each element's coordinate pair, the corresponding image pixel and all pixels within the rectangles of the finite elements with dimensions **(x_scale * volume) × (y_scale * volume)** are filled (e.g., the pixel values are set to 1). Additionally, a small areas below a user defined threshold and unfilled (e.g., 0-values) clusters are identified and set to a value of 1. This is one process for generating an image from the mesh projection.

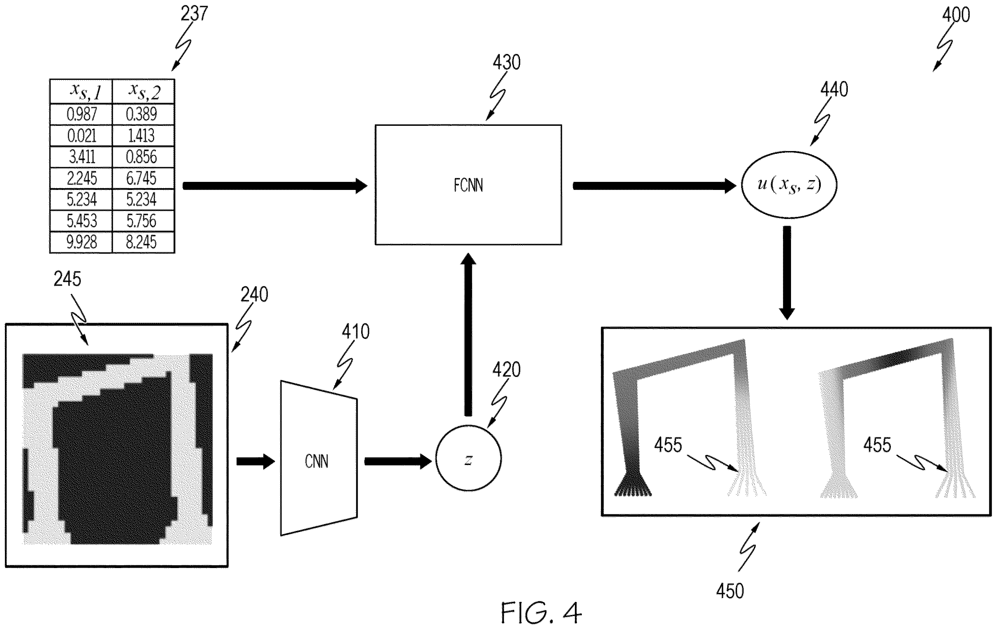

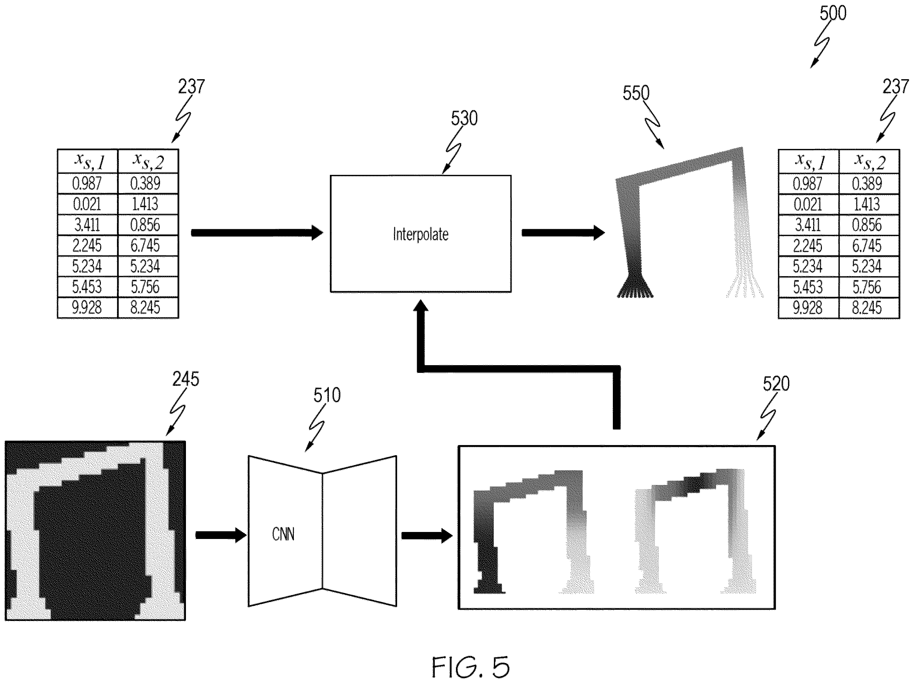

At block 140, the image representation of the geometry of the complex geometric part and the material properties are then fed into the surrogate model. The surrogate model is a trained machine-learning model configured to predict distortion of a complex geometric part in response to a sintering process of the complex geometric part and the variability of the distortion. The surrogate model can be an image-to-image (I2I) model (e.g., I2I model 500 depicted in FIG. 5) or an image-to-continuous (I2C) model (e.g., I2C model 400 depicted in FIG. 4). Each of these potential models will be described in more detail herein. In general, the surrogate model includes convolution filters that are trained to identify features such as an object's architecture, edges, floating parts, its body core, and the like. Once identified, these features are used to determine the magnitude of distortion based on the learned geometric distortions that result from sintering.

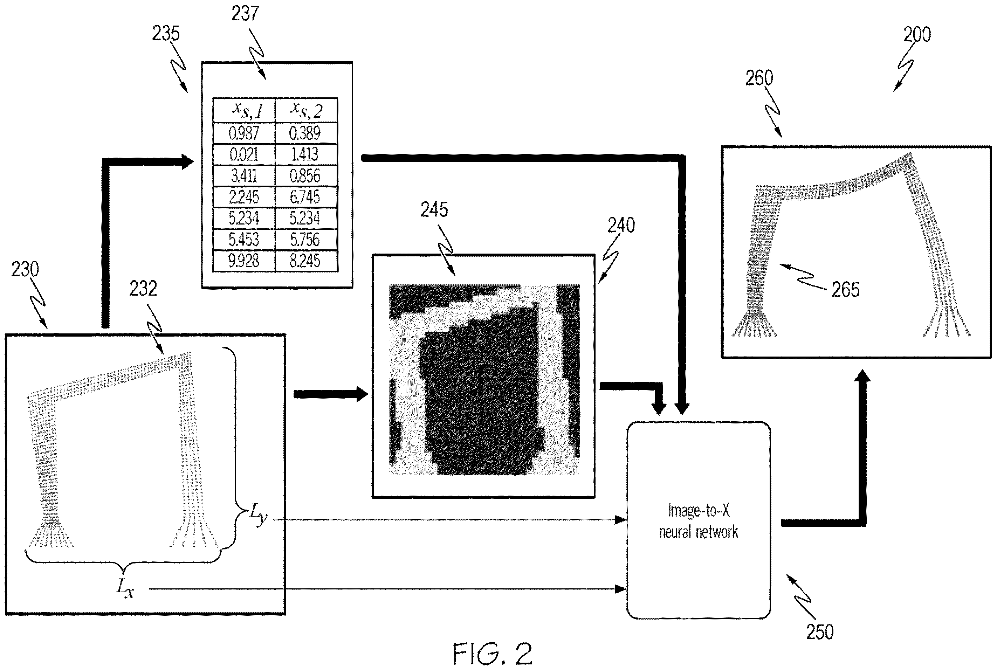

At block 150, the surrogate model outputs a predicted image or predicated geometry. In some embodiments, the surrogate model is configured to output a prediction including one or more images 155 depict the horizontal displacements and vertical displacements illustrating an amount of displacement of the plurality of finite elements of the complex geometric part (e.g., an I2I model). In other embodiments, the surrogate model is configured to output a prediction including a distorted geometry (e.g., predicted distortions 265 depicted in FIG. 2) as mesh points (e.g., an I2C model).

In addition to outputting a prediction of the distorted geometry, the surrogate model is configured to output the variability of the prediction. For example, the variability of the prediction includes mean displacements in the horizontal and vertical directions as well as variance (e.g., standard deviation). That is, once the surrogate model is trained model, a probability distribution p(***θ***) can be propagated through the trained model (e.g., a CNN) to obtain distributions on displacements, uₓ(***θ***), u_{y}(***θ***), p(uₓ(***θ***)),p(u_{y}(***θ***)). The probability distribution p(***θ***) around additional properties such as a material property, is propagated through the model. Material properties include modulus of elasticity, stiffness, density, melting point, thermal conductivity, thermal expansion, resistivity, and/or the like. When the probability distribution for an input, such as a material property, is propagated with an image representation of geometry for the coupon or component through the trained model distributions on displacements, uₓ(***θ***), u_{y}(***θ***), p(uₓ(***θ***)), p(u_{y}(***θ***)), are obtained.

At block 160, the surrogate model's output of the predicted distortion is matched at the spatial locations of the original finite elements' centroid coordinates. The original mesh 122 is overlaid with a mesh 162 of the predicted distortions. The following sections will now describe training the surrogate model and particular examples of the surrogate models (e.g., the I2I model and the I2C model).

FIG. 2 depicts an illustrative process diagram 200 of an implementation for training the image-to-X surrogate model 250. The image-to-X surrogate model 250 can be trained using images of simple geometries (e.g., primitive geometric parts) paired with either corresponding sintering simulation based distortion results or measured results from coupons manufactured using an additive manufacturing process and subsequently sintered. For training, at block 230, mesh models 232 for simple geometric components are projected into images. At block 240, the image data 245 is fed into the image-to-X surrogate model 250 along with input data on parameters of the simple geometric components such as green density, scaling factors, and the original dimensions compiled at block 235 (illustrating example input data parameters 237). Known training methods can be employed for CNN models to train the image-to-X surrogate model 250. For example, at block 260, the predicted distortions 265 of the geometric components are compared to the paired distortion results from sintering simulation or measured results from manufactured and sintered components. The comparison error is backpropagated to the CNN to minimize a loss function implemented by the model.

FIG. 3 depicts illustrative examples of simple geometries, for example, 310a, 310b, 310c, 310d, 310e, 310f, collectively referred to as simple geometries 310 and the paired distortion results, for example, 320a, 320b, 320c, 320d, 320e, 320f, collectively referred to as paired distortion results 320 for training the image-to-X surrogate model 250. The simulations can model many different simple geometries (e.g., primitive geometric parts) having on a variety of different materials. Additionally, variations to parameters such as widths, thicknesses, overhang percentages, internal hole diameters, arches and the like can also be modeled and simulated. Each of the primitive geometric coupons are designed to model basic features that when combined form complex geometries. For example, complex geometries can be defined by a plurality of basic features. In other words, composite shapes are created from two or more basic shapes such as, for example, a circle, triangle, square, rectangle, and star. As such, machine-learning models can learn distortion behaviors of simple geometries, and once the machine-learning model is trained, it can be utilized to infer distortion behaviors of complex geometries through the learned behaviors associated with simple geometries.

Turning to FIG. 4, an illustrative image-to-continuous surrogate model (I2C model) 400 is depicted. In particular, the I2C model 400 is depicted as an image-to-X surrogate model. The I2C model 400 includes a CNN 410, a latent space variable z 420, a fully connected neural network 430 (FCNN), predicted distortion and variability values 440, and predicted distortion 450 meshes. The I2C model receives image data 245 (e.g., as depicted in blocks 130) with an encoder of the CNN 410. The I2C model 400 receives image data 245 as an input to the CNN 410 the serves as an encoder. The output of the encoding process is a latent space variable z 420 that downscales the distortion information (e.g., displacement values) of the geometry of the component represented in the image (e.g., the complex geometric component). The latent space variable z 420 and the input data parameters 237 are fed into the FCNN 430 portion of the I2C model. The input data parameters 237 depict the 2-dimensional coordinates of the centroids of the finite element discretization of the coupon under consideration. In some embodiments, the input data parameters 237 may contain additional columns with values corresponding to additional material properties that can be considered random or uncertain. Their impact on the distortion variability is quantified through the I2C output. The FCNN 430 generates a predicted distortion and outputs mesh points defining the displacement values (e.g., the horizontal displacement values and the vertical displacement values). Additionally, the I2C model depicted in FIG. 4 may also generate visual representations of the predicted distortion 450 as mesh points 455, which in some embodiments can be correlated with the input mesh geometry. Illustrative examples of the generated visual representations are depicted with reference to the predicted distortion 450 shown in FIG. 4.

In other embodiments, the surrogate model is image-to-image surrogate model I2I model 500 as depicted in FIG. 5. The I2I model 500 includes a CNN 510 and an interpolate component 530. The I2C model and the I2I model both receive image data 245 (e.g., as depicted in block 130) of a geometric part to predict the distortion of the component that is fabricated using an additive manufacturing process and a sintering process. In embodiments that implement the I2I model as the surrogate model, the CNN 510 is trained to predict distortion of the complex geometric part in response to a sintering process by learning to predict distortion of primitive geometric coupons having fewer finite elements than the complex geometric part. The CNN 510 generates one or more images 520 depicting the displacement of portions of the complex geometric part. For example, one image generated by the CNN 510 illustrates the distortion in the horizontal direction and a second image generated by the CNN 510 illustrates the distortion in the vertical direction. The one or more images 520 are then interpolated with the interpolate component 530. The interpolate component 530 is configured to execute a type estimation that constructs a mesh model 550 of the component based on image data 245, the original mesh coordinates (e.g., the input data parameters 237) of the coupon and in some embodiments, other input parameters such as material information and/or density distributions of the evaluated component.

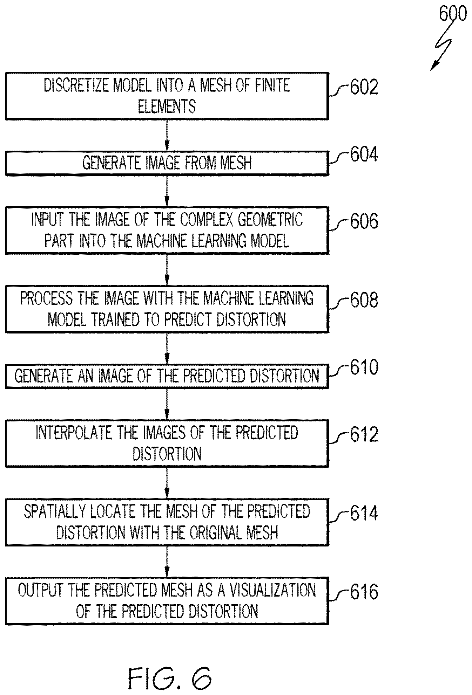

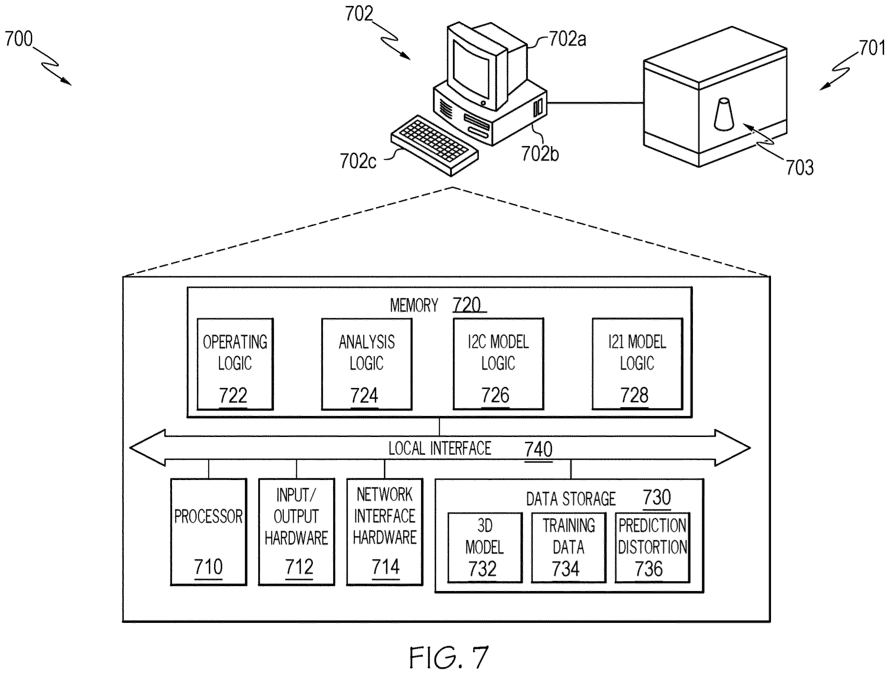

Referring now to FIG. 6, a flow diagram of an illustrative method 600 according to embodiments described herein is depicted. Method 600 and other methods described herein may be performed using any suitable combination of hardware (e.g., circuit(s)), software or manual processes, as described herein. In one or more embodiments, a computing system 700 (FIG. 7) is configured to perform the method 600. The computing system 700 may be a special-purpose electronic device configured to perform operations not performable by a general-purpose computer or device. Software embodying these processes may be stored by any non-transitory tangible medium including a fixed disk, a floppy disk, a CD, a DVD, a Flash drive, or a magnetic tape. Examples of these methods will be described below with respect to embodiments of the system, but embodiments are not limited thereto.

Referring to FIG. 6, at block 602, a computer rendered model (e.g., block 110, FIG. 1) of a complex geometric part for manufacturing via an additive manufacturing machine (AMM) is discretized into a mesh of finite elements (e.g., as described with reference to block 120 in FIG. 1). In embodiments, the method proceeds to block 604 where the mesh is projected into an image (e.g., image 245). The image of the complex geometric part may be formed from the mesh as described above with reference to block 130 in FIG. 1. At block 606, the computing system 700 proceeds with inputting the image into a trained machine-learning model (e.g., a surrogate model such as an I2C model 400 or an I2I model 500 as described herein). At block 608, the computing system 700 causes the machine-learning model to process the image in order to generate a predicted distortion of the complex geometric part. The present disclosure describes at least two types of machine-learning models, an I2C model and an I2I model, which may be implemented as the prediction process. Both machine-learning models predict distortions of the complex geometric part in response to a sintering process, where the machine-learning models are trained to predict the distortion of primitive geometric coupons having fewer finite elements than the complex geometric part. Additionally, the machine-learning model predicts mean distortion and variability of distortion of the predicted distortion. The mean distortion and the variability of the distortion may be generated as a function of the confidence value associated with the predicted distortion (e.g., the displacement values).

At block 610, once processing is complete, the machine-learning model generates an image of the predicted distortion of the complex geometric part. In embodiments, the predicted distortions (e.g., 265) may include a predicted distortion in a vertical direction and a horizontal direction. In response, the machine-learning model generates a vertical displacement image and a horizontal displacement image illustrating an amount of displacement of the plurality of finite elements of the complex geometric part. At block 612, the computing system 700 may further implement an interpolation process whereby the vertical displacement image and the horizontal displacement image are interpolated into a finite element mesh representing the predicted distortion of the complex geometric part. In some embodiments, the predicted distortion of the complex geometric part comprises a heat map depicting an amount of displacement of portions of the predicted distortion of the complex geometric part.

At block 614, the computing system 700 executes a process for spatially locating the finite element mesh (e.g., as depicted in block 160 of FIG. 1) of the predicted distortion with the original mesh of the model of the complex geometric part. As a result, the computing system 700 is capable of developing a visual representation of the predicted distortion, at block 616.

The functional blocks and/or flow diagram elements described herein may be translated into machine-readable instructions or as a computer program product, which when executed by a computing device, causes the computing device to carry out the functions of the blocks. As non-limiting examples, the machine-readable instructions may be written using any programming protocol, such as: descriptive text to be parsed (e.g., such as hypertext markup language, extensible markup language, etc.), (ii) assembly language, (iii) object code generated from source code by a compiler, (iv) source code written using syntax from any suitable programming language for execution by an interpreter, (v) source code for compilation and execution by a just-in-time compiler, etc. Alternatively, the machine-readable instructions may be written in a hardware description language (HDL), such as logic implemented via either a field programmable gate array (FPGA) configuration or an application-specific integrated circuit (ASIC), or their equivalents. Accordingly, the functionality described herein may be implemented in any conventional computer programming language, as pre-programmed hardware elements, or as a combination of hardware and software components.

Referring now to FIG. 7, the computing system 700 may be deployed over a network. The network may include a wide area network, such as the internet, a local area network (LAN), a mobile communications network, a public service telephone network (PSTN) and/or other network. The network may be configured to electronically and/or communicatively connect a computing device 702 and AMM 701.

The computing device 702 may include a display 702a, a processing unit 702b and an input device 702c, each of which may be communicatively coupled together and/or to the network. The computing device 702 may be a server, a personal computer, a laptop, a tablet, a smartphone, a handheld device, or the like. The computing device 702 may be used by a user of the system to provide information to the system. The computing device 702 may utilize a local application or a web application to access the AMM 701. The system may also include one or more data servers having one or more databases from which information may be queried, extracted, updated, and/or utilized by the computing device 702 and/or the AMM 701.

It is also understood that while the computing device 702 is depicted as a personal computer, however, this is merely an example. In some embodiments, any type of computing device (e.g., mobile computing device, personal computer, server, and the like) may be utilized for any of these components. The AMM 701 may be any rapid-prototyping, rapid manufacturing device, or additive manufacturing device such as a binder jet additive manufacturing, fused deposition modeling (FDM), stereolithography (SLA), digital light processing (DLP), selective laser sintering (SLS), selective laser melting (SLM), laminated object manufacturing (LOM), electron beam melting (EBM), and/or the like. The AMM 701 may include a processor and memory and other electronic components for receiving a computer model of a part 703 for printing. The computer model may be converted to a design configuration file corresponding to the part 703 for additive manufacturing and may be uploaded to the AMM 701, for example, by the computing device 702.

As illustrated in FIG. 7, the computing device 702 includes a processor 710, input/output hardware 712, network interface hardware 714, a data storage component 730, and a memory module 720. The memory module 720 may be machine readable memory (which may also be referred to as a non-transitory processor readable memory). The memory module 720 may be configured as volatile and/or nonvolatile memory and, as such, may include random access memory (including SRAM, DRAM, and/or other types of random access memory), flash memory, registers, compact discs (CD), digital versatile discs (DVD), and/or other types of storage components. Additionally, the memory module 720 may be configured to store operating logic 722, a analysis prediction logic 724 (e.g., logic enabling method 600 depicted in FIG. 6), an I2C model logic 726 (e.g., logic enabling the machine-learning model depicted in FIG. 4), and an I2I model logic 728 (e.g., logic enabling the machine-learning model depicted in FIG. 5, each of which may be embodied as a computer program, firmware, or hardware, as an example. A local interface 740 is also included in FIG. 7 and may be implemented as a bus or other interface to facilitate communication among the components of the computing device 702.

The processor 710 may include any processing component(s) configured to receive and execute programming instructions (such as from the data storage component 730 and/or the memory module 720). The instructions may be in the form of a machine-readable instruction set stored in the data storage component 730 and/or the memory module 720. The input/output hardware 712 may include a monitor, keyboard, mouse, printer, camera, microphone, speaker, and/or other device for receiving, sending, and/or presenting data. The network interface hardware 714 may include any wired or wireless networking hardware, such as a modem, LAN port, Wi-Fi card, WiMax card, mobile communications hardware, and/or other hardware for communicating with other networks and/or devices.

It should be understood that the data storage component 730 may reside local to or remote from the computing device 702 and may be configured to store one or more pieces of data for access by the computing device 702 and/or other components. As illustrated in FIG. 7, the data storage component 730 may store computer models 732 (e.g., CAD models) of the complex geometric components (e.g., part 703, FIG. 7) for manufacture, training data 734 (e.g., as depicted in FIG. 3), and predicted distortion 736 of the complex geometric components generated by the machine-learning model. As described herein, the computer models 732 may be of CAD models the part to be manufactured. The CAD models may define attributes of the green part of the part for additive manufacturing, such as a defined geometry, material, design tolerances, powder sizes distribution, binder type and amounts per layer, sintering profile, expansion factors, and the like.

It should now be understood that systems and methods described herein quantify the distortion of components such as binder jet parts during sintering and its variability, using machine-learning methods. In some embodiments, methods include receiving an image of a complex geometric part, the complex geometric part capable of being discretized into a plurality of finite elements, processing the image of the complex geometric part with a machine-learning model predicts distortion of the complex geometric part in response to a sintering process, where the machine-learning model is trained to predict distortion of primitive geometric coupons having fewer finite elements than the complex geometric part, and generating an image of the predicted distortion of the complex geometric part. The surrogate models are trained to make predictions on simple geometries so that when complex geometries are input to the model, the trained surrogate models can correlate the learned behaviors of simple components following sintering to discrete features of the complex geometry thereby enabling predictions of distortion of complex geometry components. Furthermore, the model can predict mean distortion and variability of distortion due to variability in input data set - green density, sintering temperature, etc.

Further aspects of the disclosure are provided by the subject matter of the following clauses:

A method for predicting distortion of a part during sintering in an additive process comprising receiving a computerized representation of a complex geometric part; discretizing the computerized representation of the complex geometric part into a plurality of elements; processing the plurality of elements of the computerized representation of the complex geometric part with a machine-learning model, the machine-learning model is configured to predict a distorted geometry of the complex geometric part in response to a sintering process, wherein the machine-learning model is trained to predict distortion of a set of primitive geometric coupons represented by image data fed into the machine-learning model during training, the set of primitive geometric coupons having fewer geometries than the complex geometric part, the complex geometric part comprises a plurality of geometries corresponding to geometries associated with the set of primitive geometric coupons; and generating a computerized representation of the predicted distorted geometry of the complex geometric part.

The method of any preceding clause, further comprising: discretizing a model of the complex geometric part into a mesh of finite elements; and generating the computerized representation of the complex geometric part from the mesh.

The method of any preceding clause, wherein the machine-learning model is configured to predict distortion in a vertical direction and a horizontal direction and generate a vertical displacement image and a horizontal displacement image illustrating an amount of displacement of the plurality of finite elements of the complex geometric part in the vertical direction and the horizontal direction.

The method of any preceding clause, further comprising: interpolating the vertical displacement image and the horizontal displacement image into a finite element mesh; locating the finite element mesh of the predicted distorted geometry with a mesh of a model of the complex geometric part; and outputting the finite element mesh of the predicted distorted geometry the mesh of the model of the complex geometric part as a visualization of the predicted distorted geometry.

The method of any preceding clause, further comprising quantifying, with the machine-learning model, the predicted distorted geometry, wherein the machine-learning model is further trained to predict mean distortion and variability of distortion of the predicted distorted geometry.

The method of any preceding clause, wherein the computerized representation of the predicted distorted geometry of the complex geometric part comprises a heat map depicting an amount of displacement of portions of the predicted distorted geometry of the complex geometric part.

The method of any preceding clause, wherein the machine-learning model is a convolutional neural network.

The method of any preceding clause, wherein the computerized representation of the complex geometric part is a 2-dimensional or a 3-dimensional model.

The method of any preceding clause, wherein the plurality of elements comprises discretized finite elements or finite difference points.

The method of any preceding clause, further comprising receiving material properties for the complex geometric part, and wherein processing the computerized representation of the complex geometric part includes processing the material properties for the complex geometric part with the machine-learning model; and predicting a mean distortion and a variability of distortion for the predicted distorted geometry.

A system for predicting distortion of a part during sintering in an additive process comprising a computing device comprising a processor and a non-transitory processor readable medium storing instructions that when executed by the processor cause the computing device to: receive a computerized representation of a complex geometric part; discretize the computerized representation of the complex geometric part into a plurality of elements; process the plurality of elements of the computerized representation of the complex geometric part with a machine-learning model, the machine-learning model is configured to predict a distorted geometry of the complex geometric part in response to a sintering process, wherein the machine-learning model is trained to predict distortion of a set of primitive geometric coupons represented by image data fed into the machine-learning model during training, the set of primitive geometric coupons having fewer geometries than the complex geometric part, the complex geometric part comprises a plurality of geometries corresponding to geometries associated with the set of primitive geometric coupons; and generate a computerized representation of the predicted distorted geometry of the complex geometric part, wherein the image.

The system of any preceding clause, wherein the instructions, when executed by the processor, further cause the computing device to: discretize a model of the complex geometric part into a mesh of finite elements; and generate the computerized representation of the complex geometric part from the mesh.

The system of any preceding clause, wherein the machine-learning model is configured to predict distortion in a vertical direction and a horizontal direction and generate a vertical displacement image and a horizontal displacement image illustrating an amount of displacement of the plurality of finite elements of the complex geometric part in the vertical direction and the horizontal direction.

The system of any preceding clause, wherein the instructions, when executed by the processor, further cause the computing device to: interpolate the vertical displacement image and the horizontal displacement image into a finite element mesh; locate the finite element mesh of the predicted distorted geometry with a mesh of a model of the complex geometric part; and output the finite element mesh of the predicted distorted geometry the mesh of the model of the complex geometric part as a visualization of the predicted distorted geometry.

The system of any preceding clause, wherein the instructions, when executed by the processor, further cause the computing device to: quantifying, with the machine-learning model, the predicted distorted geometry, wherein the machine-learning model is further trained to predict mean distortion and variability of distortion of the predicted distorted geometry.

The system of any preceding clause, wherein the computerized representation of the predicted distorted geometry of the complex geometric part comprises a heat map depicting an amount of displacement of portions of the predicted distorted geometry of the complex geometric part.

The system of any preceding clause, wherein the machine-learning model is a convolutional neural network.

The system of any preceding clause, wherein the instructions, when executed by the processor, further cause the computing device to: receive material properties for the complex geometric part, and wherein processing the image of the complex geometric part includes processing the material properties for the complex geometric part with the machine-learning model; and predict a mean distortion and a variability of distortion for the predicted distorted geometry.

A computer program product for predicting distortion of a part during sintering in an additive process, the computer program product comprising machine-readable instructions stored on a non-transitory computer readable memory, which when executed by a computing device, causes the computing device to carry out steps comprising: receiving a computerized representation of a complex geometric part; discretizing the computerized representation of the complex geometric part into a plurality of elements; processing the plurality of elements of the computerized representation of the complex geometric part with a machine-learning model, the machine-learning model is configured to predict a distorted geometry of the complex geometric part in response to a sintering process, wherein the machine-learning model is trained to predict distortion of a set of primitive geometric coupons represented by image data fed into the machine-learning model during training, the set of primitive geometric coupons having fewer geometries than the complex geometric part, the complex geometric part comprises a plurality of geometries corresponding to geometries associated with the set of primitive geometric coupons; and generating a computerized representation of the predicted distorted geometry of the complex geometric part.

The computer program product of any preceding clause, wherein: the machine-learning model is configured to predict distortion in a vertical direction and a horizontal direction and generate a vertical displacement image and a horizontal displacement image illustrating an amount of displacement of the plurality of finite elements of the complex geometric part in the vertical direction and the horizontal direction, and further comprising instructions that when executed by the computing device, causes the computing device to carry out steps comprising: interpolating the vertical displacement image and the horizontal displacement image into a finite element mesh; locating the finite element mesh of the predicted distorted geometry with a mesh of a model of the complex geometric part; and outputting the finite element mesh of the predicted distorted geometry the mesh of the model of the complex geometric part as a visualization of the predicted distorted geometry.

It is noted that the terms "substantially" and "about" may be utilized herein to represent the inherent degree of uncertainty that may be attributed to any quantitative comparison, value, measurement, or other representation. These terms are also utilized herein to represent the degree by which a quantitative representation may vary from a stated reference without resulting in a change in the basic function of the subject matter at issue.

While particular embodiments have been illustrated and described herein, it should be understood that various other changes and modifications may be made without departing from the spirit and scope of the claimed subject matter. Moreover, although various aspects of the claimed subject matter have been described herein, such aspects need not be utilized in combination. It is therefore intended that the appended claims cover all such changes and modifications that are within the scope of the claimed subject matter

## Claims

1. A method for predicting distortion of a part during sintering in an additive process comprising:
receiving a computerized representation of a complex geometric part;
discretizing the computerized representation of the complex geometric part into a plurality of elements;
processing the plurality of elements of the computerized representation of the complex geometric part with a machine-learning model, the machine-learning model is configured to predict a distorted geometry of the complex geometric part in response to a sintering process, wherein the machine-learning model is trained to predict distortion of a set of primitive geometric coupons represented by image data fed into the machine-learning model during training, the set of primitive geometric coupons having fewer geometries than the complex geometric part, the complex geometric part comprises a plurality of geometries corresponding to geometries associated with the set of primitive geometric coupons; and
generating a computerized representation of the predicted distorted geometry of the complex geometric part.

2. The method of claim 1, further comprising:
discretizing a model of the complex geometric part into a mesh of finite elements; and
generating the computerized representation of the complex geometric part from the mesh.

3. The method of claim 1, wherein the machine-learning model is configured to predict distortion in a vertical direction and a horizontal direction and generate a vertical displacement image and a horizontal displacement image illustrating an amount of displacement of a plurality of finite elements of the complex geometric part in the vertical direction and the horizontal direction.

4. The method of claim 3. further comprising:
interpolating the vertical displacement image and the horizontal displacement image into a finite element mesh;
locating the finite element mesh of the predicted distorted geometry with a mesh of a model of the complex geometric part; and
outputting the finite element mesh of the predicted distorted geometry the mesh of the model of the complex geometric part as a visualization of the predicted distorted geometry.

5. The method of claim 1, further comprising quantifying, with the machine-learning model, the predicted distorted geometry, wherein the machine-learning model is further trained to predict mean distortion and variability of distortion of the predicted distorted geometry.

6. The method of claim 1, wherein the computerized representation of the predicted distorted geometry of the complex geometric part comprises a heat map depicting an amount of displacement of portions of the predicted distorted geometry of the complex geometric part.

7. The method of claim 1, wherein the machine-learning model is a convolutional neural network.

8. The method of claim 1, wherein the computerized representation of the complex geometric part is a 2-dimensional or a 3-dimensional model.

9. The method of claim 1, wherein the plurality of elements comprises discretized finite elements or finite difference points.

10. The method of claim 1, further comprising:
receiving material properties for the complex geometric part, and wherein processing the computerized representation of the complex geometric part includes processing the material properties for the complex geometric part with the machine-learning model; and
predicting a mean distortion and a variability of distortion for the predicted distorted geometry.

11. A system for predicting distortion of a part during sintering in an additive process comprising:
a computing device comprising a processor and a non-transitory processor readable medium storing instructions that when executed by the processor cause the computing device to:
receive a computerized representation of a complex geometric part;
discretize the computerized representation of the complex geometric part into a plurality of elements;
process the plurality of elements of the computerized representation of the complex geometric part with a machine-learning model, the machine-learning model is configured to predict a distorted geometry of the complex geometric part in response to a sintering process, wherein the machine-learning model is trained to predict distortion of a set of primitive geometric coupons represented by image data fed into the machine-learning model during training, the set of primitive geometric coupons having fewer geometries than the complex geometric part, the complex geometric part comprises a plurality of geometries corresponding to geometries associated with the set of primitive geometric coupons; and
generate a computerized representation of the predicted distorted geometry of the complex geometric part.

12. The system of claim 11, wherein the instructions, when executed by the processor, further cause the computing device to:
discretize a model of the complex geometric part into a mesh of finite elements; and
generate the computerized representation of the complex geometric part from the mesh.

13. The system of claim 11, wherein:
the machine-learning model is configured to predict distortion in a vertical direction and a horizontal direction and generate a vertical displacement image and a horizontal displacement image illustrating an amount of displacement of a plurality of finite elements of the complex geometric part in the vertical direction and the horizontal direction, and
the instructions, when executed by the processor, further cause the computing device to:
interpolate the vertical displacement image and the horizontal displacement image into a finite element mesh;
locate the finite element mesh of the predicted distorted geometry with a mesh of a model of the complex geometric part; and
output the finite element mesh of the predicted distorted geometry the mesh of the model of the complex geometric part as a visualization of the predicted distorted geometry.

14. The system of claim 11, wherein the instructions, when executed by the processor, further cause the computing device to: quantifying, with the machine-learning model, the predicted distorted geometry, wherein the machine-learning model is further trained to predict mean distortion and variability of distortion of the predicted distorted geometry.

15. The system of claim 11, wherein the instructions, when executed by the processor, further cause the computing device to:
receive material properties for the complex geometric part, and wherein processing the discretized plurality of elements of the computerized representation of the complex geometric part includes processing the material properties for the complex geometric part with the machine-learning model; and
predict a mean distortion and a variability of distortion for the predicted distorted geometry.
